(19)

Europäisches
Patentamt
European
Patent Office
Office européen
des brevets

(11) **EP 3 536 820 A1**

(12) **EUROPEAN PATENT APPLICATION**
published in accordance with Art. 153(4) EPC

(43) Date of publication:
**11.09.2019 Bulletin 2019/37**

(21) Application number: **17868345.4**

(22) Date of filing: **27.10.2017**

(51) Int Cl.:
*C23C 8/06* (2006.01)        *H01M 2/20* (2006.01)
*H01M 4/66* (2006.01)

(86) International application number:
**PCT/JP2017/038982**

(87) International publication number:
**WO 2018/084091 (11.05.2018 Gazette 2018/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **02.11.2016 JP 2016215609**

(71) Applicant: **UACJ Corporation
Tokyo 100-0004 (JP)**

(72) Inventor: **ASHIZAWA, Koichi
Tokyo 100-0004 (JP)**

(74) Representative: **Bittner, Thomas L.
Boehmert & Boehmert
Anwaltspartnerschaft mbB
Pettenkoferstrasse 22
80336 München (DE)**

(54) **ALUMINUM MEMBER AND METHOD FOR PRODUCING ALUMINUM MEMBER**

(57)    An improvement in electrical conductivity of an aluminum member is provided. A surface film of the aluminum member contains at least one of aluminum oxide and aluminum hydroxide, and the surface film includes not less than 100.000 semiconducting portions per square centimeter of a surface of the aluminum member, the semiconducting portions being formed in portions of the surface film where water molecules cohere together.

Fig. 3

EP 3 536 820 A1

**Description**

The present invention relates to a surface film on aluminum.

Background

Aluminum is readily oxidized in the air and forms a surface film (natural surface film), which is a metal oxide film, on its surface. Aluminum oxides are normally insulating; however, curiously enough, for example, even if electric current is passed between an aluminum member and another conductive member (such as copper, stainless steel, carbon, or the like) which are in contact with each other, no great voltage drops occur in the two members. This is because the resistance of an aluminum surface film interposed between the aluminum member and the conductive member is small. However, there has been an increasing demand for a method to further reduce the resistance of the aluminum surface film. In general, the relationship represented by the following equation (1) is believed to hold:

$$R = \rho l/S \quad (1)$$

where R is the resistance of the surface film, $\rho$ is the resistivity of the surface film, I is the thickness of the surface film, and S is the area of contact between the two members.
It has been believed that the only way to reduce the resistance R is to reduce the value of $\rho$, reduce the value of I (reduce the thickness of the surface film), or increase the value of S (increase the area of contact).
The resistivity $\rho$ is determined depending on the characteristics of a natural surface film on aluminum or the characteristics of a surface film that has been formed on aluminum by some surface machining or treatment. However, there have been no better ways to reduce the resistivity $\rho$. In regard to the thickness I, the thickness of a natural surface film is about 3 nm. The thickness of the natural surface film differs to a small extent depending on the conditions in which an aluminum member is produced, and may gradually increase depending on the environment in which the aluminum member is used or conditions in which the aluminum member is stored. The thickness of a surface film formed by a surface machining or treatment is generally thicker than the natural surface film. Therefore, there have been no better ways to reduce the thickness I. In regard to the area of contact S, the area of contact S can be increased by making some modification to the surface profile of the contact surface. Generally, increasing the area of contact S is employed; however, the area of contact S can be increased only to a limited extent.
For example, in a case where an aluminum member is in contact with another conductive member in particulate form, the area of contact S between the aluminum member and the particulate conductive member is small. One way to address this would be to add a conductive coating to the surface of the aluminum member. Specifically, a conductant agent composed mainly of carbon or diamond-like carbon (DLC) is added onto the surface film, and thereby a conductive coating that fills the gap between the surface film and the particulate conductive member is formed. This makes it possible to substantially increase the area of contact S and, in turn, reduce the resistance R.

Citation List

Takayoshi Yoshimori et al., "Investigation of the Behavior of Surface Water on Aluminium Metal by Stepwise Heating-Coulometric Titration", Journal of the Japan Institute of Metals, pp. 950-955, Vol. 47 (1983).

Summary

Technical Problem

However, the method involving formation of the conductive coating necessitates making an additional coating (i.e., the conductive coating) between the aluminum member and the conductive member. Furthermore, the above method may be ineffective depending on the surface profile of the conductive member.
An object of an aspect of the present invention is to improve the electrical conductivity of an aluminum member.

Solution to Problem

An aluminum member in accordance with an aspect of the present invention is an aluminum member made of aluminum or an aluminum alloy, wherein a surface film of the aluminum member contains at least one of aluminum oxide and aluminum hydroxide, and the surface film includes not less than 100000 semiconducting portions per square centimeter of a surface of the aluminum member, the semiconducting portions being formed in portions of the surface film in which portions water molecules cohere together.
An aluminum member in accordance with another aspect of the present invention is an aluminum member made of aluminum or an aluminum alloy, wherein a surface film of the aluminum member contains at least one of aluminum oxide and aluminum hydroxide, and the surface film includes semiconducting portions having an area proportion of not less than 5 ppm of an area of a surface of the aluminum member, the semiconducting portions being formed in portions of the surface film in which portions water molecules cohere together.
A method of producing an aluminum member in accordance with a further aspect of the present invention is a method of producing an aluminum member made of aluminum or an aluminum alloy, the method including a step of: subjecting a surface film of the aluminum member to roughening, heat treatment, or rolling and thereby improving electrical conductivity of the surface film.

An aluminum member in accordance with still a further aspect of the present invention is an aluminum member made of aluminum or an aluminum alloy, the aluminum member having been obtained through a step of subjecting a surface film of the aluminum member to roughening, heat treatment, or rolling and thereby improving electrical conductivity of the surface film.

Advantageous Effects of Invention

According to an aspect of the present invention, it is possible to improve the electrical conductivity of an aluminum member.

Brief Description of Drawings

Fig. 1     schematically illustrates a configuration of a measuring apparatus for measuring electric current distribution.

Fig. 2     is an enlarged cross-sectional view of a portion where an aluminum member and a probe contact with each other.

Fig. 3     shows AFM images obtained with the use of the measuring apparatus and images showing electric current distribution.

Fig. 4     shows charts showing current-voltage characteristics (I-V characteristics) measured at an area that is not a current pathway spot and at a current pathway spot.

Fig. 5     shows charts showing the results of X-ray photoelectron spectroscopy (XPS) analysis carried out with respect to aluminum foil A and aluminum foil B.

Fig. 6     is a table that shows the area percentages (%) obtained by energy peak deconvolution of the results of the XPS analyses of the aluminum foil A and the aluminum foil B.

Fig. 7     is an image (negative image) showing $OH^-$ distribution in a surface film of the aluminum foil A, detected by TOF-SIMS.

Fig. 8     is a chart showing the percentage (%) of Cube orientation crystals, current pathway spot density (spots/$cm^2$), and contact resistance ($\Omega cm^2$) between each sample and a copper sheet, for the cases with and without heat treatment.

Fig. 9     is a table showing "ION TRANSFER RESISTANCE + ELECTRON TRANSFER RESISTANCE" and "REACTION RESISTANCE" in the cases with and without surface roughening.

Description of embodiments

At the start of a study of how to increase the electrical conductivity of a surface film itself on aluminum, the meaning of the resistivity $\rho$ of the surface film on aluminum in the equation (1) was reconsidered. Usually, the resistivity $\rho$ is specific volume resistivity. The main component of the surface film on aluminum is aluminum oxide ($\rho = 10^{14}$ $\Omega cm$ to $10^{15}$ $\Omega cm$), which can be said to have little electrical conductivity. In addition, it is technically impossible to reduce the resistivity $\rho$ of aluminum oxide itself or aluminum hydroxide itself. However, an actual surface film on aluminum is sufficiently electrically conductive. The following description discusses the reasons for such a paradox.

In order to improve the electrical conductivity of a surface film on aluminum, it is important to first elucidate the mechanism of why a surface film exhibits electrical conductivity. In regard to the conductivity mechanism of a surface film on aluminum, theories such as film defect theory and tunnel effect theory have been proposed; however, the mechanism has not been elucidated. The inventor of the present invention for the first time found a reason why a surface film on aluminum has electrical conductivity, based on the results of the tests and analyses described later.

(Current pathway spot)

For the purpose of examining local properties of a surface film on aluminum, distribution of electric current passing through a surface film was measured using two kinds of aluminum foil. The measurement was carried out with the use of a contacting atomic force microscope (AFM) (scanning probe microscope JSPM-5200, available from JEOL Ltd.).

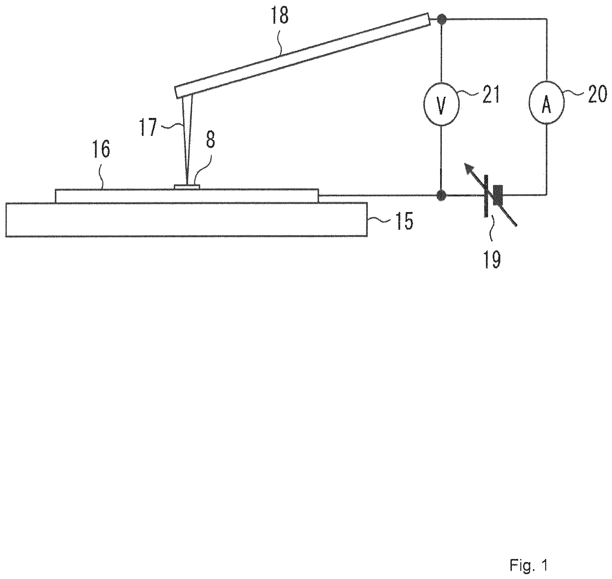

Fig. 1 schematically illustrates a configuration of a measuring apparatus for measuring electric current distribution. An aluminum member 8 was evaluated in open air at room temperature. The aluminum member 8 is placed on a stage 16 on a support 15 of the measuring apparatus. The bottom face of the aluminum member 8 is in contact with the stage 16, and the top face of the aluminum member 8 makes contact with the tip of a probe 17.

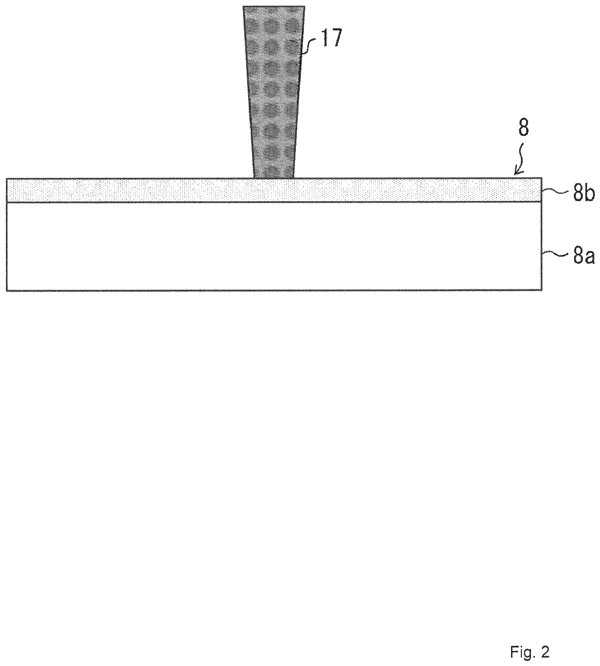

Fig. 2 is an enlarged cross-sectional view of a portion where the aluminum member 8 and the probe 17 contact with each other. The aluminum member 8 is a piece of aluminum foil, and includes: a metallic aluminum 8a which is an inner part of the aluminum member 8 and which has not been oxidized; and a surface film 8b. The surface film 8b is a mixture of aluminum oxide and aluminum hydroxide. The metallic aluminum 8a has another surface film 8b on its surface facing the stage 16, although this another surface film 8b is not illustrated in Fig. 2.

A power supply device 19 and an ammeter 20, which are in series connection to each other, are connected between the stage 16 and a cantilever 18 of the contacting AFM. The power supply device 19 is capable of applying voltages in both directions across the aluminum member 8. On the other hand, a voltmeter 21 is connected between the cantilever 18 and the stage 16. It is possible to measure electric current I that passes through the aluminum member 8 with the use of the ammeter 20 and to measure voltage V applied across the aluminum member 8 with the use of the voltmeter 21. Note that the internal resistance of the ammeter 20 is sufficiently lower than that of the measurement system and the internal resistance of the voltmeter 21 is sufficiently higher than that of the measurement system.

The cantilever 18 of the contacting AFM used here was Model No. Tap190E-G, available from Budget sensors. The cantilever 18 is provided with the probe 17. The probe 17 used here was a probe constituted by: silicon; a coating of 5 nm thick chromium on the silicon; and a coating of 25 nm thick platinum on the chromium coating. The diameter of the tip of the probe 17 was about 25 nm. Specifically, the diameter of an area in which the platinum coating at the tip of the probe 17 makes contact with the surface film of the aluminum foil was about 25 nm, and the area of contact between the surface film and the platinum film was about 450 $nm^2$. Resonant frequency was 190 kHz.

The aluminum member 8 used here was each of the following two kinds of aluminum foil: aluminum foil A; and aluminum foil B. The aluminum foil A and the aluminum foil B are each made of 1085 aluminum (which contains 99.85% Al and other elements such as, mainly, Fe and Si), have a size of 50 mm × 50 mm, and have a thickness of about 0.1 mm. The aluminum foil A is a piece of general plain aluminum foil with no surface machining. The aluminum foil B is a piece of aluminum foil with increased surface roughness obtained by sandblasting of a piece of plain aluminum foil.

With the use of the measuring apparatus, the tip of the probe 17 was scanned over an area of 25 $\mu$m × 25 $\mu$m while a bias voltage of -50 mV was being applied to the aluminum member 8 and the probe 17 was in contact with the surface of the aluminum member 8. Specifically, application of a negative bias voltage means that the potential of the stage 16 is negative relative to the probe 17. Electric current flows in a direction perpendicular to the surfaces of the aluminum member 8.

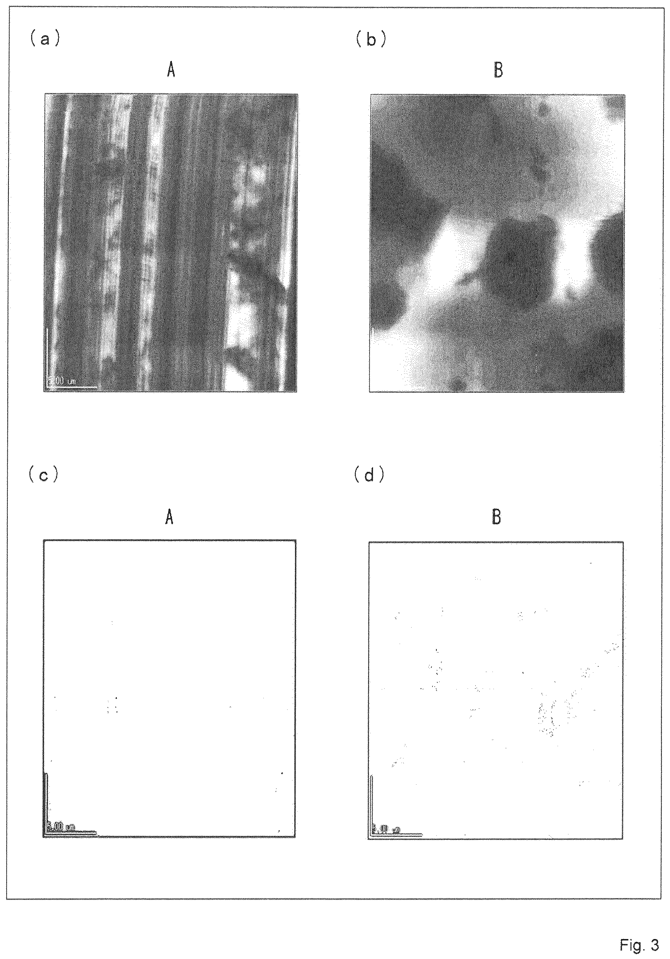

Fig. 3 shows AFM images obtained with the use of the measuring apparatus and images showing electric current distribution. (a) of Fig. 3 is an image showing the surface profile of the aluminum foil A obtained by AFM. (b) of Fig. 3 is an image showing the surface profile of the aluminum foil B obtained by AFM. (c) of Fig. 3 is an image showing where in the aluminum foil A electric current flowed, (d) of Fig. 3 is an image showing where in the aluminum foil B electric current flowed. In (c) and (d) of Fig. 3, dark spots (black dots) indicate portions where electric current flowed. In bright areas (white areas), little electric current flowed (only a very small electric current flowed).

As is clear from (c) and (d) of Fig. 3, in the surface of each aluminum foil, electric current did not flow in a uniform manner; instead, some spots through which electric current passes were present in a dispersed manner. Since each portion through which electric current passes in the surface of aluminum foil is very small, the portion here is referred to as a current pathway spot. It was found that the number of current pathway spots (density) is greater in the aluminum foil B, which has been subjected to surface machining, than in the aluminum foil A.

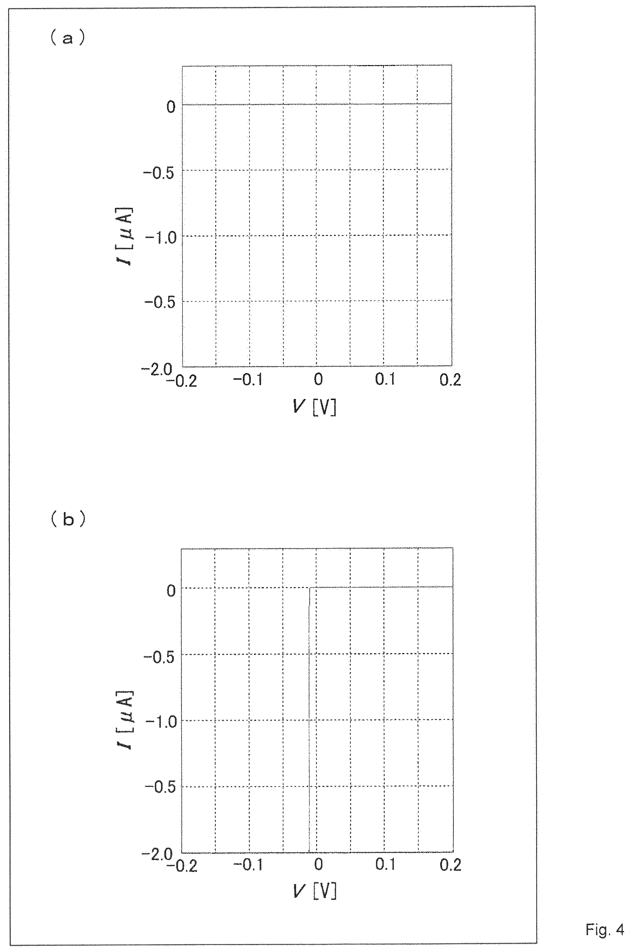

Fig. 4 shows charts showing current-voltage characteristics (I-V characteristics) measured at an area that is not a current pathway spot and at a current pathway spot. (a) of Fig. 4 shows the I-V characteristics at an area that is not a current pathway spot. (b) of Fig. 4 shows the I-V characteristics at a current pathway spot. The I-V characteristics were measured such that the probe 17 was fixed at a current pathway spot or at an area that is not a current pathway spot on each aluminum foil. The bias voltage applied to the aluminum foil was varied from - 0.2 V to +0.2 V, and sweep rate was 25 mV/s.

As shown in (a) of Fig. 4, at an area that is not a current pathway spot, no electric current flowed within this bias voltage range. This means that the surface film on aluminum at an area that is not a current pathway spot behaves as an insulator or a highly resistive material. On the contrary, as shown in (b) of Fig. 4, at a current pathway spot, electric current did not flow within the range of from +0.2 V to -0.015 V; however, a large electric current flowed at a bias voltage lower than -0.015 V. As such, at a current pathway spot, the surface film exhibited rectifying characteristics. The exhibition of rectifying characteristics means that a Schottky barrier junction is formed between the metal portion (aluminum) and the surface film of the aluminum foil, and that the surface film at the current pathway spot behaves as a p-type semiconductor. As shown in (c) of Fig. 3, the number of current pathway spots present within an area of 25 $\mu$m × 25 $\mu$m of the aluminum foil A is about twenty, and the most of this area exhibited insulating property. As shown in (d) of Fig. 3, the number of current pathway spots present within an area of 25 $\mu$m × 25 $\mu$m of the aluminum foil B is much more than that of the aluminum foil A; however, most of this area exhibited insulating property.

The results of measurement of electric current distribution in the surface film of each aluminum foil showed that, although most part of the surface film of the aluminum foil behaves as an insulator, very limited areas of the surface film allow passage of electric current, have rectifying characteristics, and behave as a p-type semiconductor.

[Water in or on surface film]

Generally, a surface film on aluminum has adsorbed water and bound water thereon and therein. Adsorbed water is water adsorbed on an outer surface (front surface) of a surface film. Bound water is water that appears when, upon heating of gibbsite or bayerite $(Al(OH)_3$

or $Al_2O_3 \cdot 3H_2O$, each of which is a kind of aluminum hydroxide) to 200°C to 300°C, gibbsite or bayerite is decomposed into aluminum oxide ($Al_2O_3$) and water ($H_2O$) or into boehmite ($Al_2O_3 \cdot H_2O$) and water ($H_2O$). Bound water does not exist in the form of water at normal temperature.

$Al_2O_3 \cdot 3H_2O$ in which water is bound to aluminum oxide ($Al_2O_3$), and aluminum hydroxide ($Al(OH)_3$), can be represented by the same chemical formula, $H_3AlO_3$. Some say that bound water reacts with aluminum oxide to form aluminum hydroxide and is present in the form of aluminum hydroxide in the surface film. However, when aluminum hydroxide powder is heated in open air and subjected to TG-DTA analysis, the aluminum hydroxide powder is pyrolyzed at 200°C to 300°C and aluminum hydroxide is decomposed into aluminum oxide and water.

The test results disclosed in Non-patent Literature 1 show that, when aluminum foil is heated, adsorbed water at the surface is desorbed at 100°C, and 0.4 mg/m$^2$ of desorbed water is detected at 400°C. The test results disclosed in Non-patent Literature 1 also report that water is desorbed also at 600°C. It is believed that water that is desorbed at 600°C is derived from boehmite ($Al_2O_3 \cdot H_2O$). Note that, according to Non-patent Literature 1, the same thermal behavior was observed both in the cases of 4N high purity aluminum and 99.4% aluminum foil.

According to XPS analysis, the percentage of area occupied by $Al(OH)_3$ at the surface of aluminum foil is about 10% (this is described later). Assuming that the surface film is 3 nm in thickness, $H_2O$ derived from $Al(OH)_3$ can be calculated as about 0.25 mg/m$^2$, which is smaller than 0.4 mg/m$^2$ that was detected in the tests in Non-patent Literature 1. This indicates that the surface film contains a significant amount of water that is not derived from aluminum hydroxide. Such water here is referred to as contained water. It is considered that, when aluminum oxide and water react to form aluminum hydroxide, excess water is bound by a weak force to aluminum hydroxide and is present in the form of contained water. It is inferred that, if the bond between this contained water and aluminum hydroxide is not strong, contained water molecules are attracted to neighboring contained water molecules due to hydrogen bonds, (move relatively freely within the surface film), and cohere together.

[XPS analysis]

For the purpose of finding out what substance constitutes a current pathway spot of the surface film, the aluminum foil A and the aluminum foil B were subjected to XPS analysis. Prior to the XPS analysis, the aluminum foil A and aluminum foil B were subjected to Ar sputtering treatment and thereby oil was removed from their surfaces. The XPS analysis here was carried out with respect to an area of several millimeters in diameter on each of the surfaces of the aluminum foil A and the aluminum foil B. Each of the obtained percentages of substances indicates the average within the above area.

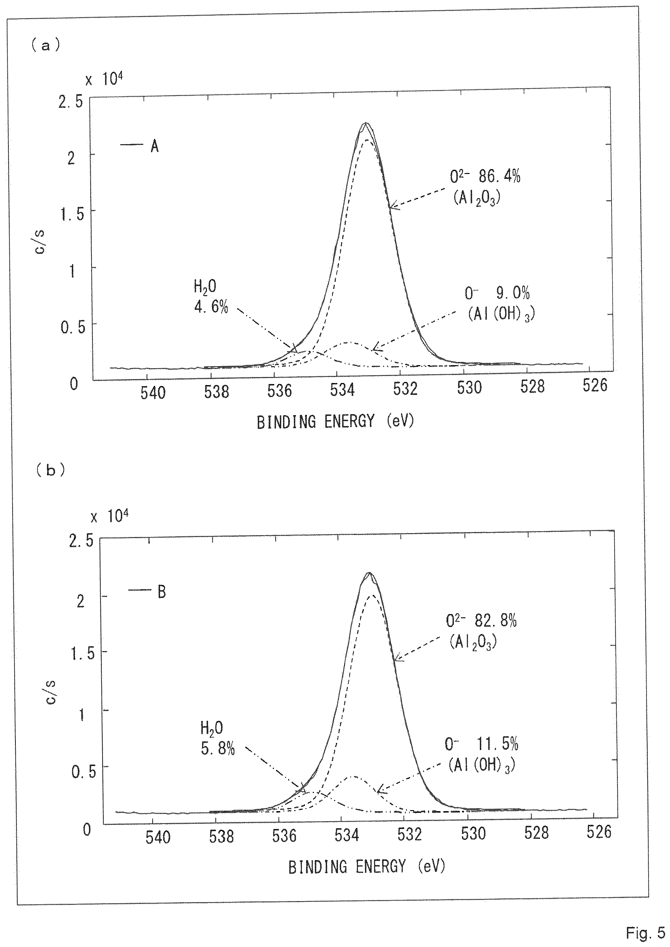

Fig. 5 shows charts showing the results of the XPS (X-ray photoelectron spectroscopy) analyses carried out with respect to the aluminum foil A and the aluminum foil B. (a) of Fig. 5 is a chart showing distribution of binding energy for the aluminum foil A. (b) of Fig. 5 is a chart showing distribution of binding energy for the aluminum foil B. (a) and (b) of Fig. 5 also show the results obtained by deconvoluting the O1s peak of the distribution of binding energy into $Al_2O_3$, $Al(OH)_3$, and $H_2O$ energy peaks (area%).

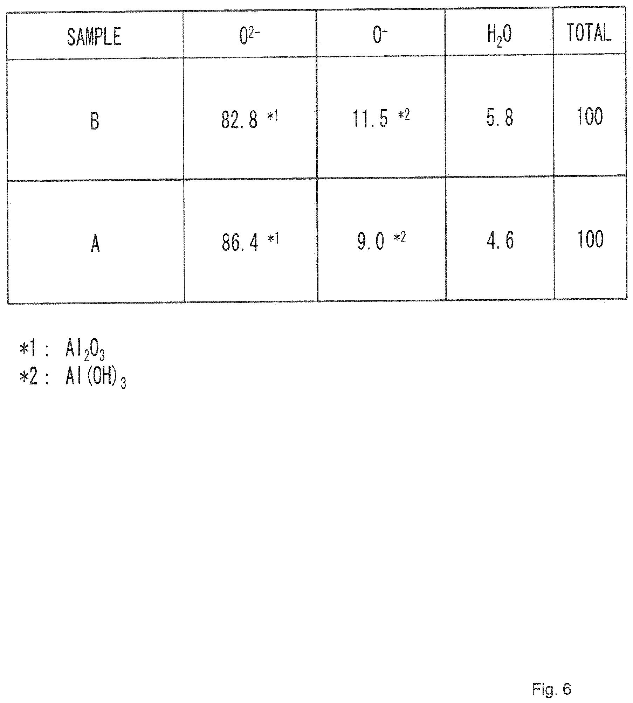

Fig. 6 is a table that shows the area percentages (%) obtained by energy peak deconvolution of the results of the XPS analyses of the aluminum foil A and the aluminum foil B. The results show that, in both the aluminum foil A and the aluminum foil B, $Al_2O_3$ is present in a percentage of 80% or greater, $Al(OH)_3$ is present in a percentage of about 10%, and $H_2O$ is present in a percentage that is about half that of $Al(OH)_3$. The results show that the area percentage of $Al(OH)_3$ and the area percentage of $H_2O$ are greater (i.e., more $Al(OH)_3$ and $H_2O$ are present) in the aluminum foil B than in the aluminum foil A. This implies that $H_2O$ is present in a large amount in an area where $Al(OH)_3$ is present in a large amount. It is considered that $H_2O$ here is contained water.

The resistivity of $Al_2O_3$ is, for example, not less than $1 \times 10^{12} \Omega cm$, which means that $Al_2O_3$ is a good insulator. The resistivity of $Al(OH)_3$ is, for example, $2 \times 10^4$ $\Omega cm$ to $5 \times 10^4$ $\Omega cm$ when in powder form, which means that $Al(OH)_3$ is a highly resistive material. The inventor made a hypothesis that water ($H_2O$) in the surface film has some relation to a current pathway spot. If the hypothesis is true, in light of the fact that current pathway spots are present only in very limited areas of the surface of aluminum foil, it is considered that water molecules ($H_2O$) are not dispersed in the surface film in a uniform manner; rather, water molecules ($H_2O$) cohere together in some areas in a sparse manner and are dispersed in a non-uniform manner in the microscopic sense. It can be inferred that an area where particularly many water molecules ($H_2O$) cohere together behaves as a current pathway spot. The cohered water molecules are considered to be the foregoing contained water.

[Distribution of water in surface film]

Next, in what manner water is distributed in a surface film of aluminum foil was studied. As shown in Fig. 6, it was found that the percentage of area occupied by water ($H_2O$) is related to the area percentage of aluminum hydroxide but not related to the area percentage of aluminum oxide. Specifically, the results of the XPS analyses indicate that, when the percentage of area occupied by aluminum hydroxide is high, the percentage of area occupied by water ($H_2O$) is also high. It can be said that, in the surface film, in an area where a large amount of aluminum hydroxide is present, water ($H_2O$) is also present in a large amount, and that, in an area where a large amount of aluminum oxide is present, water ($H_2O$) is present in a small amount. The distribution of aluminum hydroxide in the surface of a surface film can be measured by time-of-flight secondary ion mass spectrometry (TOF-SIMS).

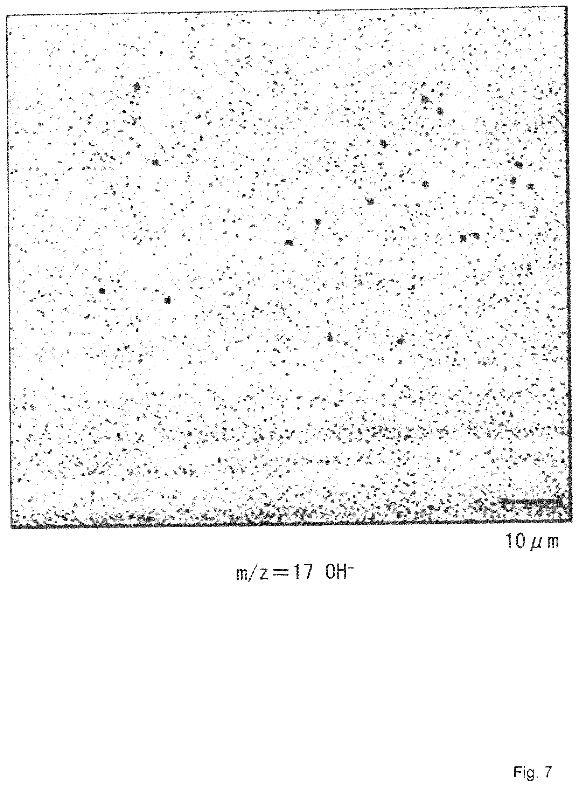

Fig. 7 is an image (negative image) showing OH⁻ distribution in the surface film of the aluminum foil A, detected by TOF-SIMS. Dark spots (black dots) indicate that a large amount of secondary ion (OH⁻) has been detected. The measured area is 100 $\mu$m × 100 $\mu$m. In Fig. 7, m/z represents a mass-to-charge number ratio (value obtained by dividing mass by charge number). The "m/z = 17" indicates OH⁻. That is, OH⁻ distribution represents distribution of aluminum hydroxide ($Al(OH)_3$). Fig. 7 shows that there are some dark spots in addition to light and shade inconsistencies attributed to the surface patterns of aluminum foil resulting from rolling. This indicates that the spots each of which is occupied to a large extent by aluminum hydroxide are present in the form of dots in a dispersed manner. Water ($H_2O$) is present in a large amount in areas where a large amount of aluminum hydroxide is present; therefore, it was confirmed that some portions of the surface film on aluminum have high water density,

As shown in (c) of Fig. 3, about twenty current pathway spots are present within an area of 25 $\mu$m × 25 $\mu$m of the aluminum foil A; however, there is only one portion in which a cluster of a plurality of current pathway spots is present. On the other hand, as shown in Fig. 7, there are about ten portions in which the water density is high within an area of 100 $\mu$m × 100 $\mu$m of the aluminum foil A. Therefore, it can be said that the density of current pathway spots and the density of portions where the water density is high are substantially equal to each other. It is considered from this that the current pathway spots in the surface film on aluminum are formed in portions of the surface of the surface film where the water density is high.

[(Conductivity mechanism of surface film]

The following summarizes a mechanism of how electrical conductivity occurs in a surface film on aluminum.

The surface film on aluminum contains at least one of aluminum oxide and aluminum hydroxide. Normally, the surface film on aluminum contains both aluminum oxide and aluminum hydroxide. Aluminum oxide, which is the main component of the surface film, is an insulator and does not have electrical conductivity,

The surface film on aluminum contains water other than bound water (such water is contained water). Molecules of contained water are present within the surface film in a dispersed manner, but not uniformly. Some of the molecules of contained water cohere together and are present at high density. More molecules of contained water are likely to cohere together in an area where aluminum hydroxide is present than in an area where aluminum oxide is present.

In the surface film, the portions where molecules of contained water cohere together and are present at high density are present in a dotted manner. Such portions each serve as a p-type semiconductor and exhibit electrical conductivity. These portions correspond to current pathway spots. These semiconducting portions are present such that they penetrate through the surface film in a direction perpendicular to the surface of the surface film. The area density of current pathway spots is low. In general aluminum foil, the area density of current pathway spots is about 30000 spots/cm². Note that a single current pathway spot has a size (diameter) of about 0.1 $\mu$m. Some current pathway spots are present individually, but it is more likely that several to several tens of current pathway spots gather.

The junction between metallic aluminum and the p-type semiconductor is a Schottky barrier junction and exhibits rectifying characteristics.

When a negative bias voltage is applied to metallic aluminum, the polarity is in the forward direction of the Schottky barrier. The ON voltage here is about -0.015 V and, at and above this voltage (-0.015 V to 0 V), only a minute electric current flows. At a voltage below about - 0.015 V (negative voltage with a large absolute value), electric current rises and flows in the forward direction.

When a positive bias voltage is applied to metallic aluminum, the polarity is in the reverse direction of the Schottky barrier. Therefore, only a minute electric current flows. If the positive bias voltage exceeds the breakdown voltage, a large electric current flows suddenly. The breakdown voltage is considered to be about +0.04 V to +0.3 V.

At the current pathway spots in the surface film, electric current flows in both directions at relatively low forward and reverse bias voltages. Specifically, when the bias voltage is within the range of from -0.015 V to +0.04 V, only a minute electric current flows; however, when the bias voltage is lower than -0.015 V or higher than +0.04 V, electric current flows well. As such, the surface film (oxide film) on aluminum exhibits substantially no rectifying characteristics and exhibits good electrical conductivity.

[Method of improving electrical conductivity]

In order to improve the electrical conductivity of a surface film on aluminum, it is important to focus on the number of current pathway spots per unit area or the area occupied by current pathway spots, instead of specific volume resistivity.

Usually, a surface film on aluminum mainly contains aluminum oxide and aluminum hydroxide. As described earlier, the resistivity of aluminum oxide and aluminum hydroxide is very large, and most part of the surface film is considered to be substantially an insulator.

In contrast, the resistivity of a current pathway spot of the surface film is considered to be about 1.3 $\Omega$cm. The area occupied by a single current pathway spot is about $1.0 \times 10^{-10}$ cm$^2$ (0.1 $\mu$m $\times$ 0.1 $\mu$m), which is substantially equal among all the current pathway spots. Assuming that the thickness of the surface film is 3 nm, the resistance of a single current pathway spot can be calculated as about 3.8 k$\Omega$. The density of current pathway spots in a usual surface film on aluminum is about 32000 spots/cm$^2$. The average surface resistance of the surface film can be calculated from this as 0.12 $\Omega$cm$^2$.

An increase in area density of current pathway spots in the surface film results in a decrease in surface resistance of the surface film in an inversely proportional manner. This makes it possible to improve the electrical conductivity of the surface film. As such, the electrical conductivity of a surface film on aluminum is determined by the area density of current pathway spots in the surface film.

The surface film on aluminum contains (i) aluminum oxide, aluminum hydroxide, or a mixture of aluminum oxide and aluminum hydroxide and (ii) contained water. Molecules of contained water cohere together and are present in a non-uniform manner in the surface film. The portions of the surface film where contained water is present at high density serve as current pathway spots and have electrical conductivity.

One way to improve the electrical conductivity of a surface film on aluminum would be to (1) increase the number of portions of the surface film where molecules of contained water cohere together or (2) increase the proportion of the area where molecules of contained water cohere together. This allows the number of current pathway spots or the area occupied by current pathway spots to increase in the microscopic sense, and thus makes it possible to obtain a surface film, on aluminum, which has improved electrical conductivity. This makes it possible to improve the electrical conductivity of an aluminum member.

When the density of current pathway spots is not less than 100000 spots/cm$^2$, it is possible to achieve a surface film whose resistance is substantially about one third or less of the resistance of a usual surface film. This is effective for improvement in electrical conductivity. Furthermore, when the density of current pathway spots is not less than 200000 spots/cm$^2$, it is possible to achieve a surface film whose resistance is substantially about one sixth or less of the resistance of a usual surface film. This is more effective. The area proportion of current pathway spots in a usual surface film is about 3.2 ppm. When the area proportion of current pathway spots is not less than 5 ppm, it is possible to achieve a surface film whose resistance is substantially about two thirds or less of the resistance of a usual surface film. This is effective for improvement in electrical conductivity. Furthermore, when the area proportion of current pathway spots is not less than 10 ppm, it is possible to achieve a surface film whose resistance is substantially about one third or less of the resistance of a usual surface film. This is more effective. Moreover, when the area proportion of current pathway spots is not less than 20 ppm, it is possible to achieve a surface film whose resistance is substantially about one sixth or less of the resistance of a usual surface film. This is more effective. The following description will discuss specific methods.

[Embodiment 1]

A surface of an aluminum member is subjected to mechanical roughening process, and thereby the surface of the aluminum member is roughened in the microscopic sense. The surface roughening can be carried out by, for example, sandblasting, liquid honing, shot peening, electric discharge machining, laser texturing, powder flame spraying, or the like. Other methods that can be employed are, for example, the following mechanical, chemical, and physical methods. Examples of mechanical methods include: a method by which the surface of an aluminum member is rubbed with abrasive paper such as emery paper; and a method by which the surface of an aluminum member is roughened by blasting such as sandblasting. Examples of chemical methods include a method by which the surface of an aluminum member is etched with an acid or the like. Examples of physical methods include a method by which ions are allowed to collide with the surface of an aluminum member by sputtering or the like and thereby the surface is roughened. One of such methods may be used independently or two or more of such methods may be used in combination.

When a surface machining is carried out on the surface of an aluminum member, the surface film of the aluminum member is locally broken and metallic aluminum is exposed momentarily; however, the exposed metallic aluminum instantly reacts with oxygen in air to form new aluminum oxide (aluminum oxide or aluminum hydroxide). In this process, water vapor in air is taken up by the surface film to become contained water in the surface film. With this, it is possible to increase portions where molecules of contained water cohere together, and thus possible to increase current pathway spots in the surface film. The portions where molecules of contained water cohere together (current pathway spots) each behave as a semiconductor. Due to the movement of carriers within such semiconducting portions, the whole surface film exhibits high electrical conductivity in a direction perpendicular to the surface. As such, it is possible to improve the electrical conductivity of the surface of the aluminum member.

[Embodiment 2]

An aluminum member is produced by a rolling process so that (100) crystal orientations of metallic aluminum are finely dispersed in a surface film. If the production is carried out by repetitive hot rolling and cold rolling, a heat treatment may be carried out prior to the last cold rolling. The heat treatment can be carried out, for example, in an inert gas atmosphere such as argon at 200°C for 10 hours. Examples of crystal planes of metallic aluminum include (100), (110) and (111) planes. Of these, (100) plane has highest work function and therefore is most likely to attract contained water. Thus, by exposing more (100) planes on a surface of metallic aluminum (on the interface between metallic aluminum and surface film), it is possible to increase current pathway spots.

It should be noted that, even when spots where molecules of contained water cohere together (current pathway spots) are observed under an SEM, no special structure of the surface film is noticeable. It was inferred from this that there is some relationship between (100) crystal orientations of metallic aluminum and water density in a surface film that is in contact with (100) planes. Work function of metallic aluminum differs from one crystal plane to another, and it is believed that work function of (100) plane is 4.41 eV, work function of (110) plane is 4.06 eV, and work function of (111) plane is 4.24 eV. It is believed that aluminum oxide in a surface film has a work function of about 4.28 eV. (100) plane is in the state (noble potential in electrochemistry) that is more likely to receive electrons than other planes. It is considered that a binding force occurs between (100) plane and electron pairs (δ-) of oxygen of a water molecule, and thereby water density at a surface of (100) plane increases.

[Effect]

An aluminum member obtained in each of the foregoing embodiments provides the following effects.
Since current pathway spots in a surface film are increased, electrical contacts or the area of contact between an aluminum member and another conductive member that makes contact with the aluminum member increase(s). This makes it possible to significantly reduce contact resistance between the aluminum member and the conductive member.

[Application]

An aluminum member that has good electrical conductivity, obtained by the foregoing method, can be used as a conductive member. For example, the aluminum member can be used as a busbar or a current collector (for positive electrode or negative electrode) of a lithium-ion battery (secondary battery). The busbar is a conductor for use in electric connections.
It should be noted that the aluminum member in the foregoing embodiments can be made mainly of aluminum or made mainly of an aluminum alloy. The shape of the aluminum member is not limited to foil, sheet, wire, and the like, and may be any shape.
Further note that the foregoing method can also be applied to titanium, tantalum, niobium, zirconium, tungsten and hafnium, which are valve metals other than aluminum, and to alloys of these valve metals.

[Recap]

An aluminum member in accordance with an aspect of the present invention is an aluminum member made of aluminum or an aluminum alloy, wherein a surface film of the aluminum member contains at least one of aluminum oxide and aluminum hydroxide, and the surface film includes not less than 100000 semiconducting portions per square centimeter of a surface of the aluminum member, the semiconducting portions being formed in portions of the surface film in which portions water molecules cohere together.
An aluminum member in accordance with another aspect of the present invention is an aluminum member made of aluminum or an aluminum alloy, wherein a surface film of the aluminum member contains at least one of aluminum oxide and aluminum hydroxide, and the surface film includes semiconducting portions having an area proportion of not less than 5 ppm of an area of a surface of the aluminum member, the semiconducting portions being formed in portions of the surface film in which portions water molecules cohere together.
A busbar in accordance with a further aspect of the present invention includes the aluminum member as described above.
A current collector for a secondary battery in accordance still a further aspect of the present invention includes the aluminum member as described above.
A method of producing an aluminum member in accordance with still a further aspect of the present invention is a method of producing an aluminum member made of aluminum or an aluminum alloy, the method including a step of: subjecting a surface film of the aluminum member to roughening, heat treatment, or rolling and thereby improving electrical conductivity of the surface film.
The method may be arranged such that the step includes increasing the number of semiconducting portions within an area of a surface of the aluminum member, the semiconducting portions being formed in portions of the surface film in which portions water molecules cohere together.
The method may be arranged such that the step includes increasing an area proportion of semiconducting portions relative to an area of a surface of the aluminum member, the semiconducting portions being formed in portions of the surface film in which portions water molecules cohere together.
An aluminum member in accordance with still a further aspect of the present invention is an aluminum member made of aluminum or an aluminum alloy, the aluminum member having been obtained through a step of subjecting a surface film of the aluminum member to roughening, heat treatment, or rolling and thereby improving electrical conductivity of the surface film.
The present invention is not limited to the embodiments, but can be altered by a skilled person in the art within the scope of the claims. The present invention also encompasses, in its technical scope, any embodiment derived by combining technical means disclosed in differing embodiments.

[Example 1]

The following description will discuss an Example of the present invention. In Example 1, a high-purity aluminum sheet whose (100) planes are easy to grow upon heat treatment was used. Note that a 6000 series alloy (Al-Mg-Si), which is often used as an aluminum member for a busbar, may be used.

Three pieces (each measuring 10 mm $\times$ 50 mm) were cut from a 100 mm $\times$ 100 mm piece of 4N aluminum sheet (thickness: 0.1 mm, surface roughness Ra: 0.7 $\mu$m) to be used as samples. One side (one surface) of a 20 mm portion at an end of each sample was subjected to surface finishing by electrolytic polishing to have a surface roughness Ra of 0.1 $\mu$m. The surface thus subjected to electrolytic polishing was subjected to the following observations, These three samples thus obtained were named Samples 1 to 3. Another three samples were prepared in the same manner as Samples 1 to 3 except that a heat treatment was carried out in an argon gas at 200°C for 10 hours prior to the last cold rolling, and named Samples 4 to 6. Using these samples, the relationship between the current pathway spots in a surface film and (100) orientation crystals of the surface film (Cube orientation crystals) was examined.

Sample 1 (without heat treatment) and Sample 4 (with heat treatment) were each subjected to observation by electron backscatter diffraction pattern (EBSP), and images of distribution of crystal orientations on the surfaces of the samples were obtained. Based on the obtained images, the percentage (area percentage) of Cube orientation crystals which are (100) orientation crystals was determined. The percentage of Cube orientation crystals at the surface of Sample 1 (without heat treatment) was 0.1%, and that of Sample 4 (with heat treatment) was 10%.

Sample 2 (without heat treatment) and Sample 5 (with heat treatment) were each subjected to the following processes. The AFM was placed into a contact mode and thereby the tip of a probe was brought into contact with the surface of the sample. A bias voltage of -0.05 V was applied to Samples 2 and 5 relative to the probe, and an area of 25 $\mu$m $\times$ 25 $\mu$m was scanned. In this way, the number of current pathway spots was counted. Next, a bias voltage of +0.05 V was applied to Samples 2 and 5, and another area of 25 $\mu$m $\times$ 25 $\mu$m was scanned, and thereby the number of current pathway spots was counted. The density of current pathway spots was not much related to the difference in bias voltage. Note, however, that the density of current pathway spots in the case of Sample 2 (without heat treatment) was about 34000 spots/cm$^2$, whereas the density of current pathway spots in the case of Sample 5 (with heat treatment) was about 240000 spots/cm$^2$. It was found that the density of current pathway spots dramatically increases upon heat treatment. Note, however, that the percentage of Cube orientation crystals and the density of current pathway spots were not in a proportional relationship.

Sample 3 (without heat treatment) and Sample 6 (with heat treatment) were each subjected to the following processes. Each sample and a copper sheet (0.1 mm in thickness, 10 mm $\times$ 50 mm, surface roughness Ra: 0.1 $\mu$m) were pressed together such that the electrolytically polished surface of the sample and a surface of the copper sheet contacted with each other uniformly within an area of 1.0 cm$^2$. A constant current of 10.0 mA was passed between the sample and the copper sheet, and the voltage at the center of the contact surface between the sample and the copper sheet was measured precisely. The contact resistance between the sample and the copper sheet was found from the measured voltage. The contact resistance in the case of Sample 3 (without heat treatment) was 0.15 $\Omega$cm$^2$. The contact resistance in the case of Sample 6 (with heat treatment) was 0.05 $\Omega$cm$^2$.

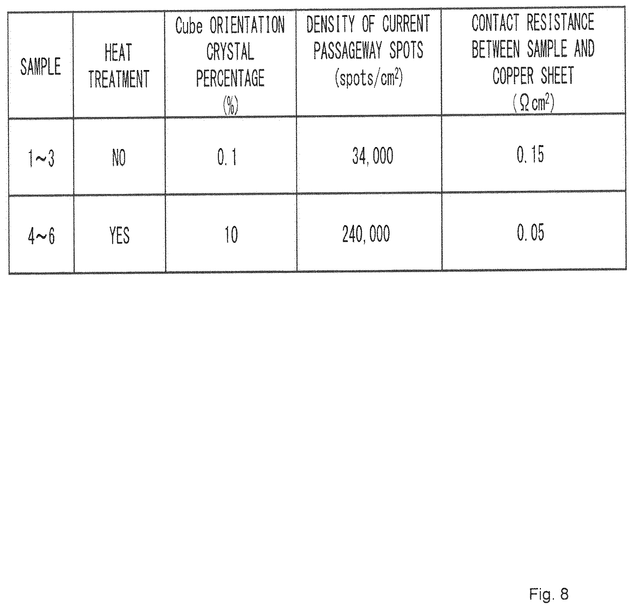

Fig. 8 is a chart showing the percentage (%) of Cube orientation crystals, current pathway spot density (spots/cm$^2$), and contact resistance ($\Omega$cm$^2$) between each sample and a copper sheet, for the cases with and without heat treatment. The results shown in the chart revealed that increasing the percentage of (100) planes (Cube orientation crystals) of an aluminum member is very useful as a means to improve the electrical conductivity of a surface film.

[Example 2]

The following description discusses another Example of the present invention. Two pieces of aluminum foil (1N30 (99.3%Al), 100 mm $\times$ 100 mm $\times$ thickness 15 $\mu$m, surface roughness Ra: 0.2 $\mu$m), which is often used in a positive electrode current collector of a lithium-ion battery, were prepared, and named Samples 11 and 12. Sample 12 was subjected to mechanical surface roughening. Specifically, the piece of aluminum foil was subjected to shot blast texturing using shot particles having a particle size of 40 $\mu$m on both sides of the aluminum foil. After the shot blast texturing, the shot particles remaining on the surface of the aluminum foil were removed by rinsing with distilled water. The thus-obtained foil was used as Sample 12. The surface roughness Ra of the thus-obtained Sample 12 was 0.8 $\mu$m. A 10 mm $\times$ 10

mm piece was cut from the central portion of Sample 11 (without surface roughening), and named Sample 13. A 10 mm × 10 mm piece was cut from the central portion of Sample 12 (with surface roughening), and named Sample 14.

Sample 13 (without surface roughening) and Sample 14 (with surface roughening) were each subjected to the following processes. The AFM was placed into a contact mode and thereby the tip of a probe was brought into contact with the surface of the sample. A bias voltage of - 0.05 V was applied to Samples 13 and 14 relative to the probe, and an area of 25 $\mu$m × 25 $\mu$m was scanned. In this way, the number of current pathway spots was counted. The density of current pathway spots in the case of Sample 13 (without surface roughening) was about 32000 spots/cm$^2$, whereas the density of current pathway spots in the case of Sample 14 (with surface roughening) was about 260000 spots/cm$^2$. It was found that the density of current pathway spots dramatically increases upon surface roughening.

For the purpose of studying internal resistances of Sample 11 (without surface roughening) and Sample 12 (with surface roughening) when Samples 11 and 12 are each used as a positive electrode current collector of a lithium-ion battery, positive electrodes were actually prepared. Sample 11 (without surface roughening) and Sample 12 (with surface roughening) were each cut into a piece of 30 mm × 100 mm. For each of the pieces to serve as a positive electrode of a lithium-ion battery, cathode active material paste was coated to a 30 mm portion at an end of each sample on one side. Specifically, the paste was prepared by mixing together (i) an active material which is LFP (lithium iron phosphate, mean particle size: 1.0 $\mu$m), (ii) a conducting aid which is 5 mass% of acetylene black (primary particle size: 5 nm), (iii) a binder which is 5 mass% of PVDF (poly(vinylidene fluoride)), and (iv) a solvent which is NMP (N-methyl-2-pyrrolidone). The paste was applied to each sample, and then dried in open air at 80°C for 30 minutes. An area around the paste-applied portion and the opposite side of the sample were coated with an insulating material so that the electrode area would be 2.0 cm$^2$ and that only the electrode area of the sample would make contact with an electrolyte solution. The positive electrode prepared from Sample 11 was named Positive Electrode 1, and the positive electrode prepared from Sample 12 was named Positive Electrode 2. Positive Electrode 1 and Positive Electrode 2 were identical to each other, except that the aluminum foil used in Positive Electrode 2 had been subjected to surface roughening.

The internal resistance of each electrode was measured by an interfacial impedance method. Lithium metal was used as a counter electrode, and a solution obtained by dissolving LiPF$_6$ in a solvent containing EC and EMC at a ratio of 3:7 was used as an electrolyte solution. The temperature of the electrolyte solution was 25°C. The measured values of impedance were plotted in a Nyquist diagram, and the plot was deconvoluted into "ION TRANSFER RESISTANCE + ELECTRON TRANSFER RESISTANCE" and "REACTION RESISTANCE".

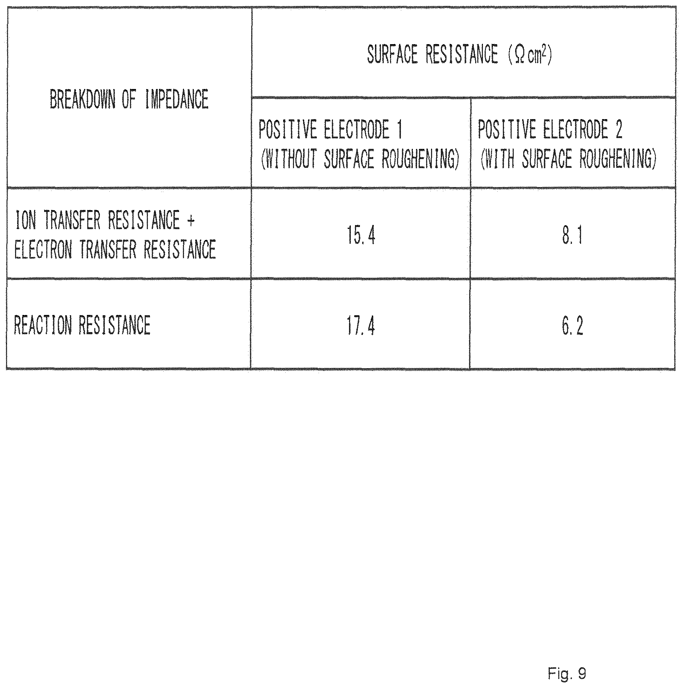

Fig. 9 is a table showing "ION TRANSFER RESISTANCE + ELECTRON TRANSFER RESISTANCE" and "REACTION RESISTANCE" in the cases with and without surface roughening. The "ION TRANSFER RESISTANCE + ELECTRON TRANSFER RESISTANCE" of Positive Electrode 2 (with surface roughening) was 47% less than that of Positive Electrode 1 (without surface roughening), and the "REACTION RESISTANCE" of Positive Electrode 2 was 64% less than that of Positive Electrode 1. It was found that surface roughening makes it possible to significantly reduce the internal resistance of a positive electrode.

Reference Signs List

8      aluminum member

8a     metallic aluminum

8b     surface film

16     stage

17     probe

18     cantilever

The features disclosed in this specification, the figures and / or the claims may be material for the realization of the invention in its various embodiments, taken in isolation or in various combinations thereof.

**Claims**

**1.** An aluminum member made of aluminum or an aluminum alloy, wherein

a surface film of the aluminum member comprises at least one of aluminum oxide and aluminum hydroxide, and the surface film includes not less than 100000 semiconducting portions per square centimeter of a surface of the aluminum member, the semiconducting portions being formed in portions of the surface film in which portions water molecules cohere together.

**2.** An aluminum member made of aluminum or an aluminum alloy, wherein

a surface film of the aluminum member comprises at least one of aluminum oxide and aluminum hydroxide, and

the surface film includes semiconducting portions having an area proportion of not less than 5 ppm of an area of a surface of the aluminum member, the semiconducting portions being formed in portions of the surface film in which portions water molecules cohere together.

3. A busbar comprising the aluminum member recited in claim 1 or 2.

4. A current collector for a secondary battery, the current collector comprising the aluminum member recited in claim 1 or 2.

5. A method of producing an aluminum member made of aluminum or an aluminum alloy, the method comprising a step of:

subjecting a surface film of the aluminum member to roughening, heat treatment, or rolling and thereby improving electrical conductivity of the surface film.

6. The method according to claim 5, wherein the step includes increasing the number of semiconducting portions within an area of a surface of the aluminum member, the semiconducting portions being formed in portions of the surface film in which portions water molecules cohere together.

7. The method according to claim 5, wherein the step includes increasing an area proportion of semiconducting portions relative to an area of a surface of the aluminum member, the semiconducting portions being formed in portions of the surface film in which portions water molecules cohere together.

8. An aluminum member made of aluminum or an aluminum alloy,
the aluminum member having been obtained through a step of subjecting a surface film of the aluminum member to roughening, heat treatment, or rolling and thereby improving electrical conductivity of the surface film.

Fig. 1

Fig. 2

（a）

A

（b）

B

（c）

A

（d）

B

Fig. 3

（ａ）

（ｂ）

Fig. 4

Fig. 5

| SAMPLE | $O^{2-}$ | $O^-$ | $H_2O$ | TOTAL |
|--------|----------|-------|--------|-------|
| B | 82.8 *1 | 11.5 *2 | 5.8 | 100 |
| A | 86.4 *1 | 9.0 *2 | 4.6 | 100 |

*1 : $Al_2O_3$
*2 : $Al(OH)_3$

Fig. 6

10 μm

m/z＝17 OH⁻

Fig. 7

| SAMPLE | HEAT TREATMENT | Cube ORIENTATION CRYSTAL PERCENTAGE (%) | DENSITY OF CURRENT PASSAGEWAY SPOTS (spots/cm$^2$) | CONTACT RESISTANCE BETWEEN SAMPLE AND COPPER SHEET ($\Omega$ cm$^2$) |
|---|---|---|---|---|
| 1~3 | NO | 0.1 | 34,000 | 0.15 |
| 4~6 | YES | 10 | 240,000 | 0.05 |

Fig. 8

| BREAKDOWN OF IMPEDANCE | SURFACE RESISTANCE ($\Omega \, cm^2$) | |
|---|---|---|
| | POSITIVE ELECTRODE 1 (WITHOUT SURFACE ROUGHENING) | POSITIVE ELECTRODE 2 (WITH SURFACE ROUGHENING) |
| ION TRANSFER RESISTANCE + ELECTRON TRANSFER RESISTANCE | 15.4 | 8.1 |
| REACTION RESISTANCE | 17.4 | 6.2 |

Fig. 9

## INTERNATIONAL SEARCH REPORT

| International application No. |
|---|
| PCT/JP2017/038982 |

**A. CLASSIFICATION OF SUBJECT MATTER**
Int. Cl. C23C8/06(2006.01)i, H01M2/20(2006.01)i, H01M4/66(2006.01)i

According to International Patent Classification (IPC) or to both national classification and IPC

**B. FIELDS SEARCHED**

Minimum documentation searched (classification system followed by classification symbols)
Int. Cl. C23C8/06, H01M2/20, H01M4/66

Documentation searched other than minimum documentation to the extent that such documents are included in the fields searched
Published examined utility model applications of Japan      1922-1996
Published unexamined utility model applications of Japan    1971-2017
Registered utility model specifications of Japan            1996-2017
Published registered utility model applications of Japan    1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-169415 A (MITSUYA:KK) 23 September 2016, paragraphs [0001]-[0007], [0012]-[0016], [0024] (Family: none) | 1-3, 5-8 |
| Y | | 1-8 |
| X | WO 2016/133144 A1 (ELEXCEL CORPORATION LTD.) 25 August 2016, paragraphs [0001], [0005], [0023]-[0026], [0061]-[0064], [0071]& JP 2016-154112 A | 1-2, 4-8 |
| Y | | 1-8 |

☒ Further documents are listed in the continuation of Box C.      ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| | |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2017/038982

C (Continuation).   DOCUMENTS CONSIDERED TO BE RELEVANT

| Category* | Citation of document, with indication, where appropriate, of the relevant passages | Relevant to claim No. |
|---|---|---|
| X | WO 2016/088430 A1 (HITACHI, LTD.) 09 June 2016, embodiment 10, comparative example 1 & US 2017/0271113 A1, embodiment 10, comparative example 1 | 1-2, 5-8 |
| Y | WO 2016/052392 A1 (MITSUBISHI MATERIALS CORP.) 07 April 2016, paragraphs [0033]-[0034]& EP 3203514 A1, paragraphs [0049]-[0050]& CN 106489198 A & KR 10-2017-0063544 A & TW 201626511 A | 1-8 |

Form PCT/ISA/210 (continuation of second sheet) (January 2015)

EP 3 536 820 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TAKAYOSHI YOSHIMORI et al.** Investigation of the Behavior of Surface Water on Aluminium Metal by Stepwise Heating-Coulometric Titration. *Journal of the Japan Institute of Metals,* 1983, vol. 47, 950-955